# EUROPEAN PATENT SPECIFICATION

(11) **EP 2 309 150 B1**
(45) Date of publication and mention of the grant of the patent: **03.04.2013**
(21) Application number: 10251779.4
(22) Date of filing: 09.10.2010
(51) Int. Cl.: F16H 25/20, B64C 9/22

(54) **Actuator arrangement**
Aktuatoranordnung
Agencement d'actionneur

(30) Priority: 09.10.2009 GB 0917693; 11.06.2010 GB 201009742
(43) Date of publication of application: 13.04.2011
(73) Proprietor: Goodrich Actuation Systems Limited, Solihull B90 4LA (GB)
(72) Inventor: Kracke, Jeremy Alan George, Stone Staffordshire ST15 8FG (GB)
(74) Representative: Bailey, Richard Alan

(56) References cited:
- EP-A1- 1 980 359
- WO-A1-2007/144295
- DE-U1-202006 018 505

## Description

This invention relates to an actuator arrangement, and in particular to an actuator arrangement suitable for use in driving a leading edge slat or other aircraft flight control surface for movement. However, it may be used in other applications.

It is known to provide an aircraft wing with leading edge slats which can be moved to a position ahead of the remainder of the wing structure in order to modify the aerodynamic properties of the aircraft wing. By moving the leading edge slat forwardly of the remainder of the wing by a distance sufficient to open a slot in the overall wing profile through which air flow can take place, allowing air to flow from beneath the wing to the upper surface thereof, the angle of attack of the wing can be modified, for a given air speed, thereby allowing adjustments in the level of lift that can be achieved.

Typically the slats are driven for movement using curved racks which are driven for movement by the rotation of pinions driven from a drive shaft. However, such arrangements have the disadvantage that they are not particularly compact, and often place design constraints upon other parts of the aircraft wing, for example requiring the formation of openings in the front spar of the wing through which the racks can extend when retracted.

EP2272752 describes an actuator arrangement in which, rather than using curved racks, a scissor linkage arrangement is used to drive the leading edge slats for movement. The scissor linkage arrangement includes an actuator arm pivotally mounted to a carriage and arranged such that axial movement of the carriage, and hence translational movement of the point at which the actuator arm is connected to the carriage, causes extension or retraction of the scissor linkage. The nature of the scissor linkage is such that, during axial movement of the carriage, angular movement thereof also takes place, the scissor linkage allowing the associated slat to move through an arcuate path of movement.

The carriage is mounted upon the nut of a ball screw type actuator arranged such that rotation of a screw shaft of the actuator whilst significant rotation of the nut is resisted results in translation of the nut, and hence of the carriage secured thereto. It will thus be appreciated that rotation of the screw shaft results in deployment or retraction of the leading edge slat.

As a large proportion of the loads to which the leading edge slat is subject, in use, are borne by the actuator arm, and so are transmitted to the carriage, it is important to ensure that the carriage is adequately supported in order to ensure that these loads can be fully accommodated. Without appropriate support, the applied bending moment could cause distortion of the carriage, or misalignment of parts of the associated actuator, which could result in jamming of the actuator and leading edge slat.

WO2007/144295 describes an actuator including all the features of the preamble of claim 1.

It is an object of the invention to provide an actuator arrangement suitable for use in such applications, whereby the carriage can be adequately supported.

According to the present invention there is provided an actuator arrangement comprising a carriage secured to a nut of a ball screw actuator, a support member, and bearing means whereby the carriage is supported for axial movement relative to the support member, and characterised in that the ball screw actuator includes a screw shaft driven by a drive shaft which extends within the support member, the drive shaft extending to a position in which it can be connected to the drive shaft of another similar actuator arrangement,

The support member is preferably of cylindrical or part cylindrical form, the carriage bearing upon the support member. Alternatively, the carriage may be located within the support member.

The support member is conveniently of elongate, generally tubular form, the nut of the ball screw actuator being located within the support member and the carriage being external of the support member, the carriage and nut being secured to one another by a fastening that extends through a slot provided in the support member such that the fastening moves along the slot as the nut and carriage are driven for movement.

The bearing means may comprise a sliding bearing. Alternatively, the bearing means may comprise a series of wheels, rollers, balls or other bearing elements mounted upon the carriage and arranged to be conveyed upon or within the support member.

As mentioned hereinbefore, the carriage may be provided with bearing means, preferably ball or roller bearing means, cooperable with the support member such that the carriage is supported by the support member. Conveniently, the support member is provided with guide means, for example in the form of guide recesses, with which the bearing means cooperate.

The actuator arrangement conveniently further comprises a housing rotatably supporting a screw shaft of the ball screw actuator, the support member preferably being angularly moveable relative to the housing. A sliding bearing is preferably provided to sustain or support the support member for such angular movement.

Another sliding bearing is preferably provided between the nut and/or carriage and the support member. It will thus be appreciated that good bearing for the support member is provided, and consequently that the carriage is well supported and thus able to bear the loads applied thereto, In use.

It will be appreciated that the actuator arrangement is advantageous in that it permits support of the carriage, and hence of an actuator arm secured thereto, in a relatively simple and convenient manner, the actuator arrangement being of relatively compact form, and hence of a form suitable for use in the confined space in the leading edge structure of an aircraft wing.

The invention will further be described, by way of example, with reference to the accompanying drawings, in which:
Figure 1 is a view illustrating a scissor linkage being used in controlling the movement of a leading edge slat;
Figure 2 is a sectional view of an actuator arrangement in accordance with an embodiment of the invention and suitable for use in driving the scissor linkage for movement;
Figure 3 is a diagrammatic representation of an alternative scheme;
Figures 4 and 5 are views illustrating two implementations of the scheme of Figure 3;
Figure 6 is a part sectional view illustrating part of an actuator arrangement in accordance with another, preferred, embodiment of the invention; and
Figure 7 is a view illustrating part of the actuator arrangement of Figure 6 in greater detail.

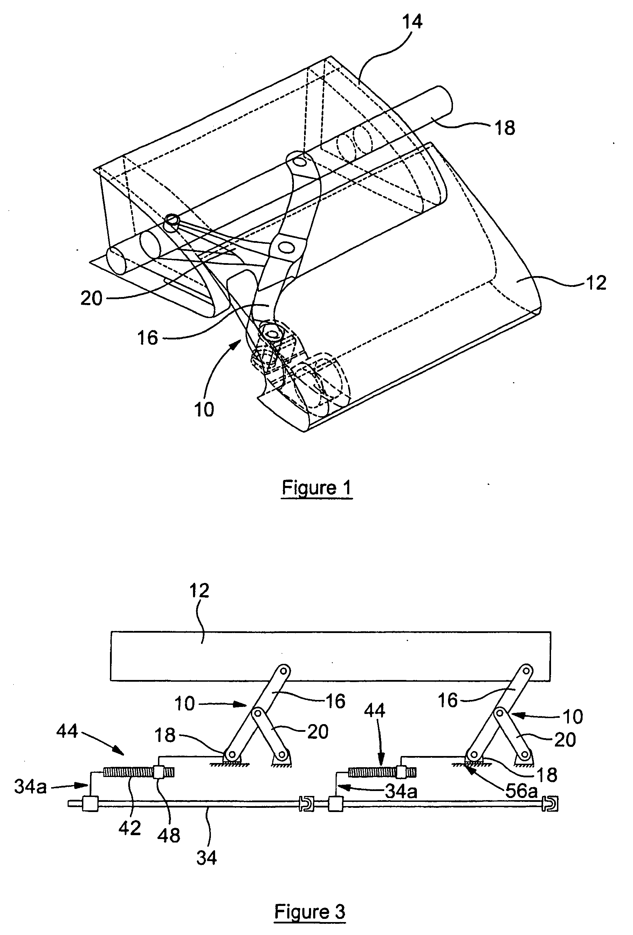

Referring firstly to Figure 1 there is illustrated a scissor linkage arrangement 10 for use in driving a leading edge slat 12 for movement relative to the main wing structure 14 of an aircraft wing. In the position illustrated, the scissor linkage arrangement 10 is in an intermediate position between its stowed and fully deployed positions.

The scissor linkage arrangement 10 comprises an actuator arm 16 pivotally mounted, at one end thereof, to a mounting bracket associated with the leading edge slat 12, and pivotally connected at its opposite end to an axially translatable, and angularly moveable, carriage 18. The carriage 18 is arranged to be driven for axial movement by an appropriate drive mechanism (not shown in Figure 1).

A support arm 20 is pivotally mounted, at one end, to the main wing structure 14, the other end of the support arm 20 being coupled to an intermediate part of the actuator arm 16 by a coupling which permits three degrees of relative motion therebetween.

A scissor linkage of this type is described in greater detail in EP2272752.

In use, axial displacement of the carriage 18 moves the point at which the actuator arm 16 is pivotally connected to the carriage 18 either closer to or further away from the point at which the support arm 20 is pivotally connected to the main wing structure, depending upon the direction of movement of the carriage 18. As a result, the scissor linkage 10 operates to drive the leading edge slat 12 between its stowed and fully deployed position. As described in EP2272752, the pivot axis of the support arm 20 is defined, relative to the axis of movement of the carriage 18, to result in the leading edge slat following a desired curved path of movement as it is driven between its stowed and fully deployed positions.

It will be appreciated that, in use, significant loadings are transmitted through the scissor linkage 10 as the scissor linkage 10 has to fully support the weight of the leading edge slat 12 and, more importantly, react the aerodynamic loadings thereon. Although the pivotal mounting of the support arm 20 to the main wing structure 14 can reasonably easily be designed in such a manner as to be able to withstand and bear such loadings, supporting the carriage 18 in such a manner as to be able to bear such loadings, whilst being able to transmit drive to the carriage 18 to move the carriage 18 in the axial direction in order to drive the scissor linkage 10, and hence the leading edge slat 12, for movement, is more difficult.

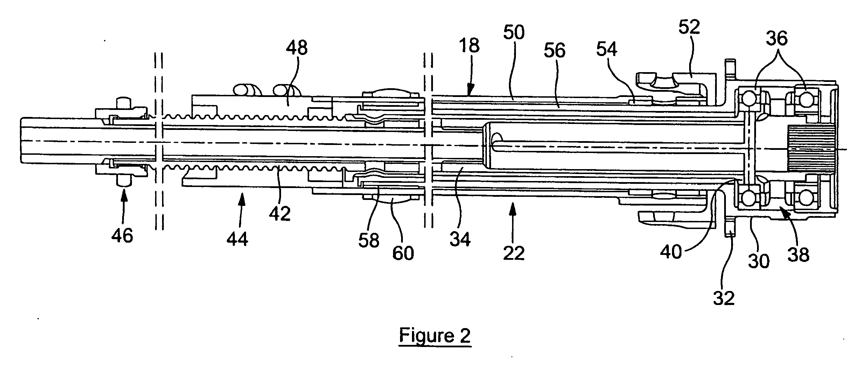

In accordance with one embodiment of the invention, as shown in Figure 2, an actuator arrangement 22 is provided to transmit axial drive to the carriage 18 whilst providing adequate support thereto.

The actuator arrangement shown in Figure 2 comprises a housing 30 adapted to be secured, by mountings 32, to parts of the main wing structure 14. The housing 30 supports a drive shaft 34 for rotation relative thereto by means of bearings 36. A torque limiter 38 couples the drive shaft 34 to a drive transmission tube 40, whereby rotary drive from the drive shaft 34 is transmitted to a screw shaft 42 of a recirculating ball screw actuator 44. The free end of the screw shaft 42 is coupled to the drive shaft 34 by a backlash coupling 46. In normal use, the backlash coupling 46 does not transmit drive between the drive shaft 34 and the screw shaft 42, drive being transmitted via the torque limiter 38 and drive transmission tube 40, but in the event of relative movement occurring between the drive shaft 34 and the drive transmission tube 40, for example as a result of a failure in the torque limiter 38, then drive can be transmitted through the backlash coupling 46 once the backlash therein has been taken up.

The ball screw actuator 44 further includes a nut 48 coupled to the screw shaft 42, the coupling being such that, upon rotation of the drive shaft 34 and screw shaft 42, the nut 48, which in use is restrained against significant angular movement by its connection to the actuator arm 16 (described below) is driven for axial movement.

The nut 48 is coupled to the carriage 18 which is in the form of a tubular shaft 50 carrying, at its end remote from the nut 48, a bracket 52 to which the actuator arm 16 is pivotally mounted, in use.

At its end adjacent the bracket 52, the carriage 18 is provided with a sliding bearing 54 whereby the carriage 18 is supported for axial, sliding movement upon support means in the form of a tubular extension 56 of the housing 30. As the sliding bearing 54 is aligned with or close to the point at which the actuator arm 16 is pivotally connected to the carriage 18, it will be appreciated that the applied loadings can be efficiently transmitted to the support means with minimal distortion of the carriage 18, the application of bending moments thereto being avoided or very significantly reduced. The end of the tubular extension 56 of the housing 30 adjacent the point at which the drive transmission tube 40 is attached to the screw shaft 42 also carries a sliding bearing 58 which further serves to support the carriage 18. A further sliding bearing 60 is secured to a fixed part (not shown) of the main wing structure 14 also adjacent the point at which the drive transmission tube 40 is attached to the screw shaft 42 and, again, serves to support the carriage 18. It will be appreciated that the various sliding bearings serve to fully support the carriage for axial, and limited angular, movement, thereby ensuring that loadings transmitted thereto from the actuator arm 16 can be reacted to the main wing structure 14, either directly or via the housing 30.

In use, several actuator arrangements of this type will typically be arranged in an end to end configuration, and it will be appreciated that the drive shafts 34 thereof can be interconnected with one another such that a single drive motor (not shown) can be used to drive the carriages 18 of each actuator arrangement for movement.

Figure 3 illustrates, diagrammatically, a variant in which the drive shaft 34, rather than extending through the housing 30, is spaced therefrom, and a suitable drive transmission 34a, optionally including a no-back device, is provided to transmit drive to the screw shaft 42 of each actuator 44. The nut 48 of each actuator 44 is rigidly connected to the associate carriage 18, thus each actuator 44 serves to drive the associated carriage 18 for axial movement. In accordance with the invention, support means 56a sustains the carriage 18 for sliding movement. As with the arrangement of Figure 2, the support means 56a is aligned with or located adjacent or close to the point at which the actuator arm 16 is connected to the carriage 18, thereby ensuring that the loads can be reacted without significant distortion or misalignment occurring.

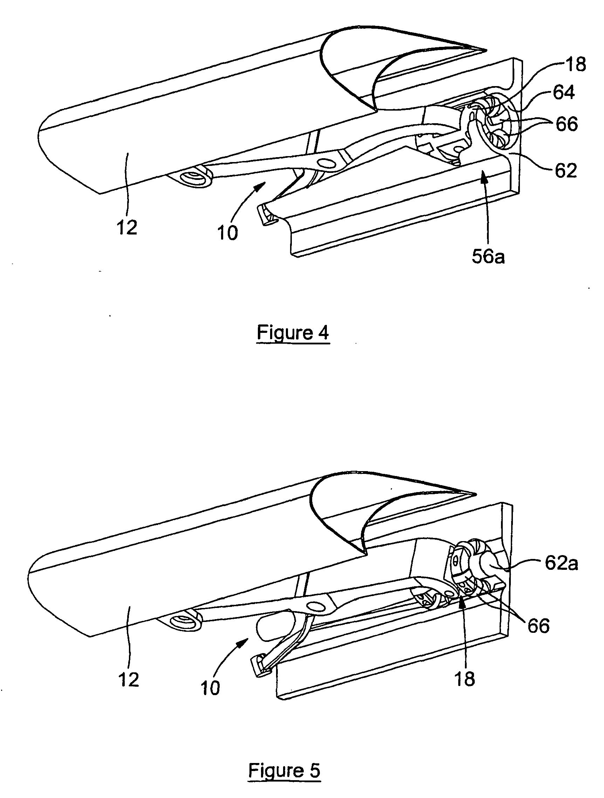

As shown in Figure 4, the support means 56a may comprise a member 62 defining a part cylindrical recess 64 within which the carriage 18 can ride, the carriage being sustained for sliding movement within the recess 64 by wheels, rollers, balls or other bearing elements 66 incorporated into the design of the carriage 18. Alternatively, as shown in Figure 5, a member 62a having a part cylindrical outer periphery may be provided, upon which the carriage 18 is sustained and guided for movement. Again, wheels, rollers, balls or other bearing elements 66 may be incorporated into the design of the carriage 18 to provide a bearing between the carriage 18 and the support member 62a.

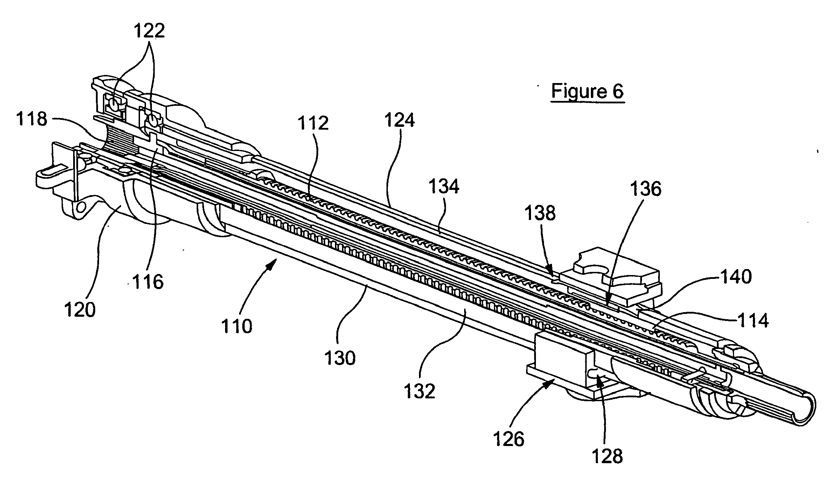

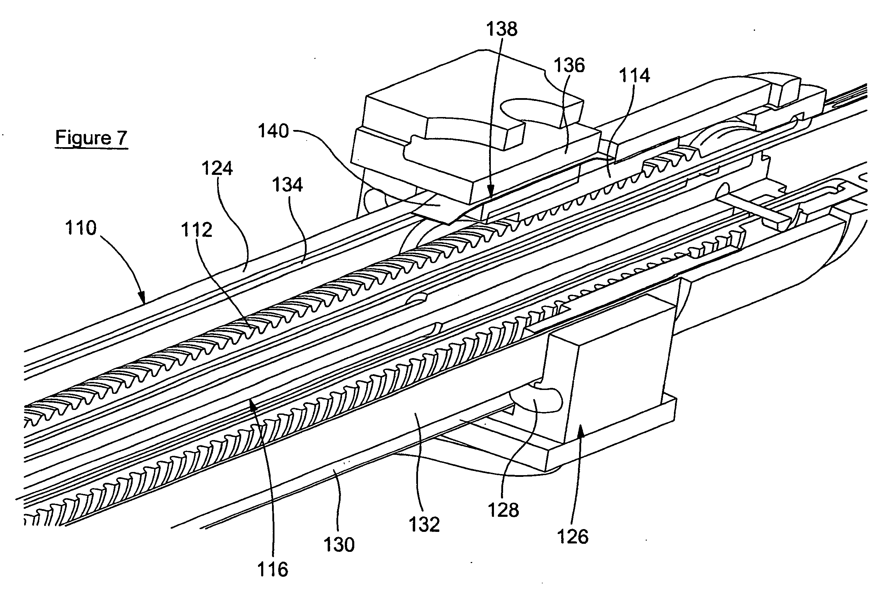

Referring next to Figures 6 and 7 of the accompanying drawings, a currently preferred form of actuator arrangement comprises a ball screw actuator 110 having a rotatable screw shaft 112 with threads that cooperate with ball components (not shown) associated with a nut 114. The shaft 112 is coupled via a torque limiting connection or torque limiter 116 to a drive input 118 supported for rotation relative to a housing 120 by bearings 122.

A tubular support member 124 encircles the screw shaft 112 and an end of the support member 124 projects into the housing 120 where the end part of the support member 124 is sustained via slide bearings (not shown) so as to permit the support member 124 to move angularly relative to the housing 120 and to permit rotary motion of the screw shaft 112 relative thereto. The manner in which the support member 124 is sustained results in the support member 124 being able to bear significant lateral loadings, in use, transmitting those loadings to the housing 120, whilst enabling continued operation of the actuator and permitting the support member 124 to move, angularly, relative to the housing 120.

A carriage 126 is located externally of the support member 124 and is able to translate along the support member 124, the carriage 126 being sustained for sliding movement relative to the support member 124 by ball or roller bearings 128 conveyed in guide means 130 in the form of elongate guide grooves formed in the support member 124. To provide additional stability, the support member 124 is provided with flats 132 with which parts of the carriage 126 can engage to limit angular movement of the carriage 126 relative to the support member 124.

The carriage 126 is coupled to the nut 114 such that translational movement of the nut 114 along the screw shaft 112 is transmitted to the carriage 126. As the nut 114 is located within the support member 124, in order to permit movement of the nut 114 to be transmitted to the carriage 126 the support member 124 is provided with one or more elongate slots 134 through which fastener means 136 extend to secure the carriage 126 to the nut 114. In use, as the screw shaft 112 rotates and the nut 114 translates, the translational movement of the nut 114 is transmitted to the carriage 126 via the fastener means 136, the fastener means 136 translating along the slot 134 during such movement.

In order to restrict the ingress of debris into the actuator arrangement through the slot 134, a sliding seal arrangement 138 is preferably provided, the sliding seal arrangement 138 including an elongate seal member 140, a section of which is illustrated in Figures 6 and 7. The elongate seal member 140 is secured at its ends to the support member 124 adjacent the ends of the slot 134, the seal member 140 extending through a seal passage formed in the fastener means 136 such that a sufficiently good seal is maintained across the slot 134 at all times whilst permitting movement of the nut 114 and carriage 126. US60/23111 describes a seal arrangement of a form that may be adapted for use in this present application.

An air gap exists between the support member 124 and the nut 114 so as to ensure that there is no direct contact therebetween that could result in unfavourable side loads being transmitted to the nut 114, in use.

It will be appreciated that the actuator arrangement described hereinbefore may be used in controlling the operation of an actuator arrangement of the type described in, for example, EP2272752 with the actuator arm thereof pivotally mounted to the carriage 126 and the support arm thereof pivotally mounted to a fixed part of the associated wing structure. The pivot axis about which the support arm of EP2272752 is pivotally mounted would be orientated relative to the axis of the screw shaft 112 such that these axes are not perpendicular in either the lateral or wing chord planes, as described in EP2272752. In such an arrangement, rotation of the screw shaft 112 will result in translational movement of the nut 114 and carriage 126, the carriage 126 being sustained for such movement relative to the support member 124 by the bearings 128. The movement of the carriage 126 results in corresponding movement of the actuator arm. As a result of the orientation of the axes mentioned above, limited angular movement of the actuator arm about the axis of the screw shaft 112 takes place, such movement requiring the carriage 126 to move angularly. The presence of the bearings 128 and flats 132 prevents significant angular movement of the carriage 126 relative to the support member 124, and so the limited angular movement of the actuator arm is transmitted through the carriage 126 to the support member 124, the movement being permitted by the sliding bearings upon which the support member 124 is sustained.

In the arrangement described hereinbefore, the support member 124 is securely sustained or supported by the sliding bearings and so is able to bear the loadings applied thereto, in use, by the carriage 126 and actuator arm without impeding the operation of the actuator arrangement

It will be appreciated that many of the benefits of the design illustrated in Figures 1 to 5 are also applicable to the embodiment of Figures 6 and 7. For example, the screw shaft 112 can be connected to the screw shaft of one or more similar actuator arrangements such that a plurality of actuator arrangements can be driven in synchronism by a single drive source.

Each of the arrangements described hereinbefore has the advantage that the carriage is fully supported, and thus able to react loadings applied thereto, whilst being able to move axially and translate angularly relative to its support. Further, each of the arrangements allows the actuator arrangement to be of compact form, which is advantageous in that it allows the actuator arrangement to be accommodated relatively easily within the confined spaced available in the leading edge structure of a wing.

It will be appreciated that a wide range of modifications and alterations may be made to the arrangements described hereinbefore without departing from the scope of the invention.

## Claims

1. An actuator arrangement comprising a ball screw actuator (44), a carriage (18, 126) secured to a nut (48, 114) of the ball screw actuator (44), a support member (56, 124), and bearing means (54, 58, 128) whereby the carriage (18, 126) is supported for axial movement relative to the support member (56, 124), and **characterised in that** the ball screw actuator 44 includes a screw shaft (42) driven by a drive shaft (34) which extends within the support member (30), the drive shaft (34) extending to a position in which it is connected to the drive shaft of another similar actuator arrangement.

2. An arrangement according to Claim 1, wherein the support member (56, 124) is of cylindrical or part cylindrical form, the carriage (18, 126) bearing upon the support member (56, 124).

3. An arrangement according to Claim 1, wherein the carriage (18, 126) is located within the support member (56, 124).

4. An arrangement according to Claim 1 or Claim 2, wherein the support member (124) is of elongate, generally tubular form, the nut (114) of the ball screw actuator being located within the support member (124) and the carriage (126) being external of the support member (124), the carriage (126) and nut (114) being secured to one another by a fastener means (136) that extends through a slot (134) provided in the support member (124) such that the fastener means (136) moves along the slot (134) as the nut (114) and carriage (126) are driven for movement.

5. An arrangement according to any of the preceding claims, wherein the bearing means comprise a sliding bearing (54, 56).

6. An arrangement according to any of Claims 1 to 4, wherein the bearing means comprise a series of wheels, rollers, balls or other bearing elements (128) mounted upon the carriage (126) and arranged to be conveyed upon or within the support member (124).

7. An arrangement according to any of the preceding claims, wherein the support member (124) is provided with guide means (130) with which the bearing means cooperate.

8. An arrangement according to Claim 7, wherein the guide means (130) is in the form of one or more elongate guide grooves.

9. An arrangement according to any of the preceding claims, further comprising a housing (120) permitting rotary motion of a screw shaft (112) of the ball screw actuator, the support member (124) being angularly moveable relative to the housing (120).

10. An arrangement according to Claim 9, wherein a sliding bearing is provided to sustain the support member (124) for such angular movement.

11. An arrangement according to Claim 10, wherein a further sliding bearing is provided between the nut (114) and/or carriage (126) and the support member (124).

## Patentansprüche

1. Aktuatoranordnung, die aufweist: einen Kugelspindelaktuator (44); einen Schlitten (18, 126), der an einer Mutter (48, 114) des Kugelspindelaktuators (44) gesichert ist; ein Halteelement (56, 124); und eine Lagereinrichtung (54, 58, 128), wobei der Schlitten (18, 126) für eine axiale Bewegung relativ zum Halteelement (56, 124) gestützt wird, und **dadurch gekennzeichnet, dass** der Kugelspindelaktuator (44) eine Schraubenwelle (42) umfasst, die mittels einer Antriebswelle (34) angetrieben wird, die sich innerhalb des Halteelementes (30) erstreckt, wobei sich die Antriebswelle (34) bis zu einer Position erstreckt, in der sie mit der Antriebswelle einer weiteren gleichen Aktuatoranordnung verbunden wird.

2. Anordnung nach Anspruch 1, bei der das Halteelement (56, 124) eine zylindrische oder teilzylindrische Form aufweist, wobei der Schlitten (18, 126) auf dem Halteelement (56, 124) aufliegt.

3. Anordnung nach Anspruch 1, bei der der Schlitten (18, 126) innerhalb des Halteelementes (56, 124) angeordnet ist.

4. Anordnung nach Anspruch 1 oder Anspruch 2, bei der das Halteelement (124) eine längliche im Allgemeinen rohrartige Form aufweist, wobei die Mutter (114) des Kugelspindelaktuators innerhalb des Halteelementes (124) angeordnet ist, und wobei der Schlitten (126) außerhalb des Halteelementes (124) ist, wobei der Schlitten (126) und die Mutter (114) aneinander mittels einer Befestigungseinrichtung (136) gesichert sind, die sich durch einen im Halteelement (124) vorhandenen Schlitz (134) erstreckt, so dass sich die Befestigungseinrichtung (136) längs des Schlitzes (134) bewegt, während die Mutter (114) und der Schlitten (126) für eine Bewegung angetrieben werden.

5. Anordnung nach einem der vorhergehenden Ansprüche, bei der die Lagereinrichtung ein Gleitlager (54, 56) aufweist.

6. Anordnung nach einem der Ansprüche 1 bis 4, bei der die Lagereinrichtung eine Reihe von Rädern, Rollen, Kugeln oder anderen Lagerelementen (128) aufweist, die auf dem Schlitten (126) montiert und so angeordnet sind, dass sie auf dem oder innerhalb des Halteelementes (124) transportiert werden.

7. Anordnung nach einem der vorhergehenden Ansprüche, bei der das Halteelement (124) mit einer Führungseinrichtung (130) versehen ist, mit der die Lagereinrichtung zusammenarbeitet.

8. Anordnung nach Anspruch 7, bei der die Führungseinrichtung (130) in der Form einer oder mehrerer länglicher Führungsnuten vorliegt.

9. Anordnung nach einem der vorhergehenden Ansprüche, die außerdem ein Gehäuse (120) aufweist, das die Drehbewegung einer Schraubenwelle (112) des Kugelspindelaktuators gestattet, wobei das Halteelement (124) relativ zum Gehäuse (120) winkelig beweglich ist.

10. Anordnung nach Anspruch 9, bei der ein Gleitlager vorhanden ist, um das Halteelement (124) für eine derartige Winkelbewegung zu stützen.

11. Anordnung nach Anspruch 10, bei der ein weiteres Gleitlager zwischen der Mutter (114) und/oder dem Schlitten (126) und dem Halteelement (124) vorhanden ist.

## Revendications

1. Assemblage d'actionneur, comprenant un actionneur à vis à billes (44), comprenant un chariot (18, 126) fixé sur un écrou (48, 114) de l'actionneur à vis à billes (44), un élément de support (56, 124) et des moyens de palier (54, 58, 128) le chariot (18, 126) étant ainsi supporté en vue d'un déplacement axial par rapport à l'élément de support (56, 124), et **caractérisé en ce que** l'actionneur à vis à billes (44) englobe un arbre à vis (42) entraîné par un arbre d'entraînement (34) s'étendant dans l'élément de support (30), l'arbre d'entraînement (34) s'étendant vers une position dans laquelle il est connecté à l'arbre d'entraînement d'un autre assemblage d'actionneur similaire.

2. Assemblage d'actionneur selon la revendication 1, dans lequel l'élément de support (56, 124) a une forme cylindrique ou en partie cylindrique, le chariot (8, 126) reposant sur l'élément de support (56, 124).

3. Assemblage selon la revendication 1, dans lequel le chariot (18, 126) est agencé dans l'élément de support (56, 124).

4. Assemblage selon les revendications 1 ou 2, dans lequel l'élément de support (124) a une forme allongée, généralement tubulaire, l'écrou (114) de l'actionneur à vis à billes étant agencé dans l'élément de support (124) et le chariot (126) étant agencé à l'extérieur de l'élément de support (124), le chariot (126) et l'écrou (114) étant fixés l'un à l'autre par un moyen de fixation (136), s'étendant à travers une fente (134) formée dans l'élément de support (124), de sorte que le moyen de fixation (136) se déplace le long de la fente (134) lorsque l'écrou (114) et le chariot (126) sont entraînés en vue d'un déplacement.

5. Assemblage selon l'une quelconque des revendications précédentes, dans lequel les moyens de palier comprennent un palier à glissement (54, 56).

6. Assemblage selon l'une quelconque des revendications 1 à 4, dans lequel les moyens de palier comprennent une série de roues, de rouleaux, de billes et d'autres éléments de palier (128) montés sur le chariot (126) et destinés à être transportés sur ou dans l'élément de support (124).

7. Assemblage selon l'une quelconque des revendications précédentes, dans lequel l'élément de support (124) comporte un moyen de guidage (130) avec lequel les moyens de palier coopèrent.

8. Assemblage selon la revendication 7, dans lequel le moyen de guidage (130) a la forme d'une ou de plusieurs rainures de guidage allongées.

9. Assemblage selon l'une quelconque des revendications précédentes, comprenant en outre un boîtier (120), permettant un déplacement rotatif de l'arbre à vis (112) de l'actionneur à vis à billes, l'élément de support (124) pouvant être déplacé angulairement par rapport au boîtier (120).

10. Assemblage selon la revendication 9, dans lequel un palier à glissement sert à soutenir l'élément de support (124) en vue d'un tel déplacement angulaire.

11. Assemblage selon la revendication 10, dans lequel un palier à glissement additionnel est agencé entre l'écrou (114) et/ou le chariot (126) et l'élément de support (124).
